# EUROPÄISCHE PATENTSCHRIFT

(11) **EP 0 720 880 B1**
(45) Veröffentlichungstag und Bekanntmachung des Hinweises auf die Patenterteilung: **20.01.1999**
(21) Anmeldenummer: 95117209.7
(22) Anmeldetag: 02.11.1995
(51) Int. Cl.: B23B 31/08, B23Q 11/04, B23B 49/00

(54) **Werkzeughalter, insbesondere Schnellwechselfutter**
Tool holder, particularly quick release chuck
Porte outil, en particulier mandrin à changement rapide

(30) Priorität: 21.12.1994 DE 4445611
(43) Veröffentlichungstag der Anmeldung: 10.07.1996
(73) Patentinhaber: OTTO BILZ, Werkzeugfabrik GmbH & Co., 73760 Ostfildern (DE)
(72) Erfinder: Bilz, Reiner, Dipl.-Ing., D-73732 Esslingen (DE); Bäder, Siegfried, D-73257 Köngen (DE)
(74) Vertreter: Kratzsch, Volkhard, Dipl.-Ing.

(56) Entgegenhaltungen:
- EP-A- 0 292 651
- EP-A- 0 464 335
- DE-A- 4 314 235

## Beschreibung

Die Erfindung bezieht sich auf einen Werkzeughalter, insbesondere Schnellwechselfutter, der im Oberbegriff des Anspruchs 1 genannten Art.

Ein Werkzeughalter dieser Art ist bekannt (DE 43 14 235 A1) und hat sich bewährt. Sofern dieser Werkzeughalter mit einer axialen Längenausgleichseinrichtung versehen ist, ermöglicht diese einen Axialausgleich bei einer Relativverschiebung zwischen dem Kopf einerseits und dem Gehäuse, in das z.B. ein Schnellwechseleinsatz eingesetzt ist, andererseits. Ein solcher Längenausgleich z.B. auf Druck ist dann von Vorteil, wenn das Werkzeug schadhaft oder gar zerstört werden sollte und z.B. im Werkstück festsitzt, hingegen der Axialvorschub und der Drehantrieb maschinenseitig weiterhin wirksam ist. Es wird angestrebt, eine derartige, werkzeugseitige Störung in möglichst einfacher Weise zu erfassen und an eine geeignete Einrichtung zu signalisieren, damit vor dem nächsten Bearbeitungsgang das Werkzeug gewechselt werden kann. Bekannt sind diesbezüglich Futter mit einer besonderen integrierten Hochfrequenzsendeeinrichtung (DE 30 46 485 C2). Derartige Futter haben sich bewährt. Sie sind aber recht kostenaufwendig und bedürfen im übrigen einer internen eigenen Stromquelle, die bei nachlassender Leistung ausgetauscht werden muß. Im übrigen ergeben sich Entsorgungsprobleme für ausgetauschte Stromquellen.

Bekannt ist ferner ein Werkzeughalter (EP 292 651 A1), dessen Aufnahme eine innere, relativ lange Bohrung aufweist, in der unmittelbar ein Werkzeug, z. B. ein Bohrer, aufnehmbar ist, der am hinteren Ende von einer Feder in der Bohrung der Aufnahme axial beaufschlagt wird. Der Werkzeughalter ist mit einer das übertragbare Drehmoment begrenzenden Kupplung versehen, die in einer Radialöffnung der Aufnahme eine mittels Feder belastete Kugel aufweist, die mit dem eingesteckten Werkzeug in dessen Schaftbereich zusammenarbeitet. Der Schaftbereich des Werkzeuges ist im Bereich der Kugel verjüngt und mit einem Polygonprofil versehen, mit dem die Kugel zur Übertragung eines Antriebsmoments von der Aufnahme auf das Werkzeug formschlüssig in Eingriff steht. Wird das Werkzeug aus irgendwelchen Gründen größeren Drehmomenten ausgesetzt, so wird das Werkzeug axial in die Aufnahme hineingedrückt und die Kugel gegen ihre Feder radial nach außen und außer Eingriff mit dem Polygonprofil bewegt. Der Werkzeughalter ist mit einer Drucklufteinrichtung verbunden, über die ein Ansprechen der Drehmomentkupplung erfaßbar ist. Hierzu ist der Schaft des Werkzeuges mit einer inneren Längsbohrung versehen, die an einem Ende mit einer radialen, nach außen mündenden Auslaßbohrung in Verbindung steht und die etwa im Bereich der Längenmitte mit einer anderen radialen Bohrung im Werkzeug komuniziert, die bei nicht ausgelöster Kupplung mit einer Radialbohrung in der Aufnahme in Verbindung steht, welcher durch einen Kanal in einem stationären Halter, der die Aufnahme umgibt, von außen her Druckluft zugeführt wird, die von einer äußeren Druckluftquelle erzeugt wird. In dieser äußeren Druckluftleitung befindet sich ein Druckwächter. Bei Ansprechen der Überlastkupplung erfolgt eine Relativdrehung des Werkzeuges relativ zur Aufnahme, so daß die Radialbohrung des Werkzeuges nicht mehr mit derjenigen der Aufnahme kommuniziert. Dies führt in der Druckluftspeiseleitung zu einem Druckluftanstieg, der dort vom Druckwächter erfaßt wird, worüber ein Störzustand beim Werkzeug signalisiert wird.

Der Erfindung liegt die Aufgabe zugrunde, einen Werkzeughalter, insbesondere ein Schnellwechselfutter, der im Oberbegriff des Anspruchs 1 genannten Art zu schaffen, das in einfacher Weise bei schadhaftem Werkzeug eine Signalgabe ermöglicht und dabei kompakt ist, einen geringen Aufwand bedingt und ohne eine integrierte Hochfrequenzsendeeinrichtung bzw. eine integrierte Stromquelle arbeiten kann.

Die Aufgabe ist bei einem Werkzeughalter, insbesondere Schnellwechselfutter, der im Oberbegriff es Anspruchs 1 genannten Art gemäß der Erfindung durch die Merkmale im Kennzeichnungsteil des Anspruchs 1 gelöst. Eine solche innere Signaleinrichtung führt zu einem Werkzeughalter, der hinsichtlich seiner Abmessungen und des Bauaufwandes zumindest im wesentlichen unverändert belassen werden kann. Dabei ist eine solche innere Signaleinrichtung einfach und betriebssicher.

Von besonderem Vorteil ist es, wenn diese innere Signaleinrichtung auf eine axiale Verschiebung des Kopfes relativ und in Richtung zum Gehäuse oder dazu gegensinnig anspricht, wie dies im wesentlichen z.B. in den Ansprüchen 20 bis 22 angegeben ist. Eine solche Ausgestaltung ist dann verwirklichbar, wenn der Werkzeughalter eine axiale Längenausgleichseinrichtung aufweist. Statt dessen kann die innere Signaleinrichtung aber auch auf eine Relativdrehung zwischen einem Teil des Werkzeughalters,z.B. einem Teil des Gehäuses, einerseits und dem Schnellwechseleinsatz oder einem Teil des Schnellwechseleinsatzes andererseits ansprechen, wie dies im wesentlichen z.B. in den Ansprüchen 23 bis 31 angegeben ist.

Weitere vorteilhafte Erfindungsmerkmale sowie Ausgestaltungen ergeben sich aus den übrigen Ansprüchen.

Durch die Erfindung wird in besonders einfacher Weise als Signal für ein schadhaftes oder zerstörtes Werkzeug oder eine sonstige Störung im Bereich zwischen Werkzeug und Werkstück eine Sperrung des Kühlmittelflusses herangezogen, die eine Erhöhung des Staudruckes in der das Kühlmittel zum Werkzeughalter führenden Leitung zur Folge hat. Dieser erhöhte Staudruck läßt sich in einfacher Weise meßtechnisch erfassen und daraus ein Signal für die eingetretene Störung gewinnen, so daß bei Überwachung der Werkzeugmaschine und des Bearbeitungsvorganges leicht und sicher festgestellt werden kann, daß beim Werkzeughalter die Sicherheitseinrichtung angesprochen hat und ein Defekt vorliegt. Im Falle eines schadhaften Werkzeuges wird dieses nämlich werkstückseitig abgestoppt. Der maschinenseitige Vorschub und Drehantrieb erfolgt jedoch weiter. In diesem Fall spricht die Sicherheitskupplung z.B. im Schnellwechseleinsatz an, die die Trennung des Antriebes in Drehrichtung ermöglicht. Hierbei kann im übrigen eine axiale Relativbewegung des Kopfes relativ und in Richtung zum Gehäuse erfolgen, weil der maschinenseitige Vorschub weiterhin wirksam ist. Diese axiale Relativverschiebung gemäß z.B. den Ansprüchen 20 bis 22 oder die Relativdrehung z.B. gemäß den Ansprüchen 23 bis 31 führt zum Sperren des Kühlmittelflusses, was in beschriebener Weise die Störungssignalgabe zur Folge hat. Analoges ist auch dann der Fall,wenn eine gegensinnige axiale Relativverschiebung des Kopfes relativ zum Gehäuse erfolgt,wobei ein axialer Längenausgleich auf Zug geschieht.

Weitere Einzelheiten, insbesondere Erfindungsmerkmale, sowie Vorteile der Erfindung ergeben sich aus der nachfolgenden Beschreibung.

Die Erfindung ist nachfolgend anhand von zwei in der Zeichnung gezeigten Ausführungsbeispielen näher erläutert. Es zeigen:
- Fig. 1: einen schematischen axialen Längsschnitt eines Werkzeughalters gemäß einem ersten Ausführungsbeispiel mit eingesetztem Schnellwechseleinsatz in Betriebsstellung,
- Fig. 2: einen schematischen axialen Längsschnitt entsprechend Fig. 1, jedoch in einer anderen relativen Axialstellung,
- Fig. 3: einen schematischen axialen Längsschnitt eines Werkzeughalters gemäß einem zweiten Ausführungsbeispiel mit eingesetztem Schnellwechseleinsatz in Betriebsstellung,
- Fig. 4: einen schematischen axialen Längsschnitt entsprechend Fig. 3, jedoch in einer anderen relativen Drehstellung.

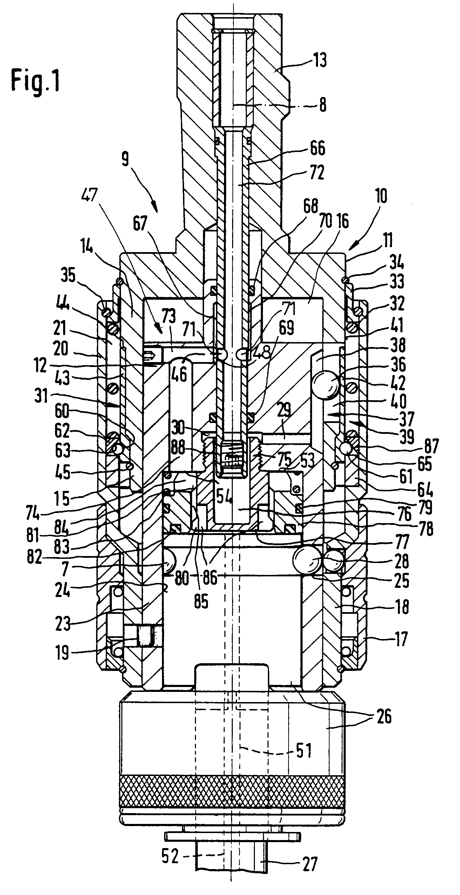

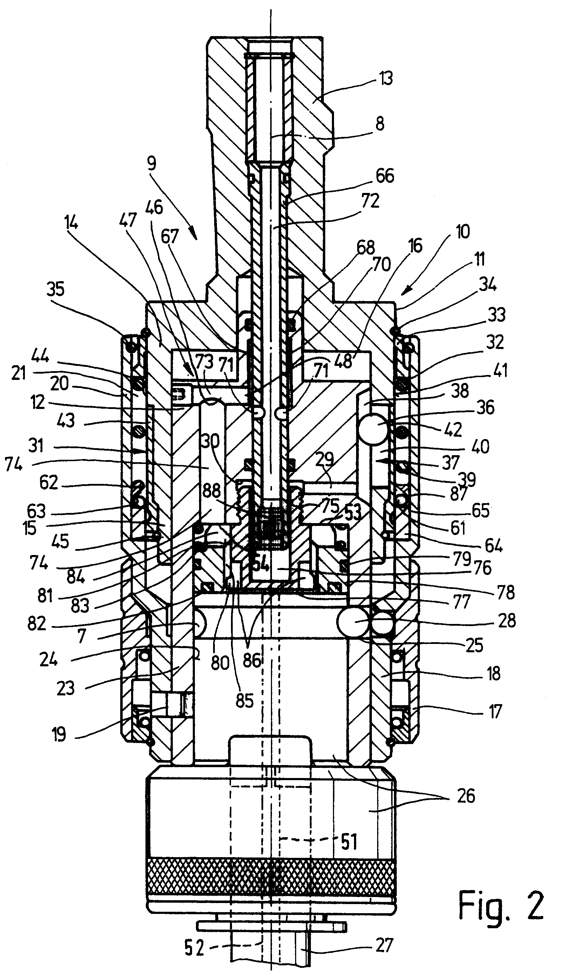

Der in Fig. 1 und 2 gezeigte Werkzeughalter 9 des ersten Ausführungsbeispieles besteht insbesondere aus einem Schnellwechselfutter 10, vorzugsweise zum Gewindeschneiden, Gewindeformen, Bohren od.dgl . Das Schnellwechselfutter 10 weist eine Aufnahme 11 und ein Gehäuse 12 auf. Die Aufnahme 11 ist am in Fig. 1 oberen Ende 13 zum Einsetzen in eine nicht gezeigte Maschinenspindel, Werkzeugaufnahme od.dgl . einer Werkzeugmaschine eingerichtet, wobei dieses Ende 13 z.B. als Schaft ausgebildet ist, der unmittelbar oder unter Zwischenfügung eines Anpassungselements in der nicht gezeigten Maschinenspindel, Werkzeugaufnahme od.dgl. aufnehmbar und mit dieser zur Drehmitnahme koppelbar ist.

Am gegenüberliegenden,in Fig. 1 unten befindlichen Ende weist die Aufnahme 11 einen Kopf 14 auf, der mit einer Zylinderwandung 15 versehen ist, innerhalb der eine koaxiale zylindrische Öffnung 16 enthalten ist, die in Fig. 1 nach unten hin offen ist. In dieser Öffnung 16 ist das Gehäuse 12 undrehbar, jedoch in axialer Längsrichtung entsprechend der Längsmittelachse 8 relativverschiebbar, aufgenommen und geführt.

Das Gehäuse 12 ist etwa umgekehrt topfförmig gestaltet und weist im unteren Teil eine Zylinderwandung 23 auf,die eine koaxiale zylindrische und in Fig.1 nach unten offene Öffnung 24 umschließt, in die ein nur angedeuteter üblicher Schnellwechseleinsatz 26 einsetzbar und damit axial und drehmomentübertragend kuppelbar ist. Der Schnellwechseleinsatz 26 trägt ein Werkzeug 27, das z.B. zum Gewindeschneiden, Gewindeformen od.dgl. geeignet ist. Die axiale formschlüssige Arretierung und Drehmitnahme des eingesetzten Schnellwechseleinsatzes 26 erfolgt in üblicher Weise (DE-OS 39 02 559) über mindestens eine Haltekugel 28, die in einer Radialöffnung 25 der Zylinderwandung 23 des Gehäuses 12 gehalten ist. Die Haltekugel 28 greift formschlüssig in eine äußere Ringnut 7 des Schnellwechseleinsatzes 26 ein. Es können auch mehrere, in Umfangsrichtung in Abständen angeordnete Haltekugeln 28 vorgesehen sein.

Die Haltekugel 28 wird mittels einer äußeren Betätigungshülse 17 betätigt, die eine Außenhülse 18 umgibt und relativ dazu in Axialrichtung verschiebbar ist. Die Außenhülse 18 umgreift die Zylinderwandung 23 und ist auf dieser fest aufgesetzt und mittels z.B. einer Gewindeschraube 19 fest verbunden. In Fig. 1 nach oben hin erweitert sich der Innendurchmesser der Außenhülse 18 derart, daß diese mit einem oberen zylindrischen Hals 20 die Zylinderwandung 15 des Kopfes 14 unter Bildung eines Ringraumes 21 dazwischen umschließt. In diesem Ringraum 21 ist eine axiale Längenausgleichseinrichtung 31 enthalten, die axial zwischen dem Gehäuse 12 und der Aufnahme 11 wirksam ist und einen axialen Längenausgleich bei einer Relativverschiebung in beiden Achsrichtungen, somit auf Zug und auf Druck, ermöglicht. Zugleich ist die Längenausgleichseinrichtung 31 als Anschnittdruckverstärker bei Druck in Axialrichtung gemäß Fig. 1 von oben nach unten wirksam. Die Längenausgleichseinrichtung 31 enthält im Ringraum 21 eine einzige Druckfeder 32 für den Längenausgleich in der einen bzw. in der anderen Achsrichtung. Die Druckfeder 32 ist mit dem oberen Ende an einem Ring 33 abgestützt, der über einen Sprengring 34 an der Aufnahme 11 gegen Verschiebung in Fig. 1 nach oben gesichert ist. Über einen Sprengring 35 auf der Innenseite des Halses 20 kann bei Relativverschiebung des Gehäuses 12 in Fig. 1 nach unten der Ring 33 ebenfalls nach unten verschoben werden. Bei einer Relativverschiebung des Gehäuses 12 mit der Außenhülse 18 in Fig. 1 nach oben bleibt der Ring 33 als Widerlager für die Druckfeder 32 stehen. Dies ist dann der Fall, wenn z.B. beim Bohren ein Axialdruck von der Maschinenspindel über die Aufnahme 11 her auf das Werkzeug 27 wirkt und dieser nach Ansprechen des Anschnittdruckverstärkers von der Druckfeder 32 aufgenommen wird, da hierbei die Aufnahme 11 mit dem Ring 33 relativ zum Gehäuse 12 in Fig. 1 nach unten bewegt wird unter Zusammendrücken der Druckfeder 32.

Der Kopf 14 ist mit dem Gehäuse 12 in Axialrichtung und Umfangsrichtung über zumindest einen Mitnahmekörper 36,insbesondere eine Mitnahmekugel,gekuppelt,der zwischen dem Kopf und dem Gehäuse 12 angeordnet ist.Dabei ist der mindestens eine Mitnahmekörper 36 teilweise in einer zugeordneten Längsnut 37 des Kopfes 14 und teilweise in einer zugeordneten Längsnut 38 des Gehäuses 12 gehalten, so daß darüber die Drehmomentübertragung erfolgen kann und der Mitnahmekörper 36 bei der Relativverschiebung zwischen dem Kopf 14 und dem Gehäuse 12 abrollen kann, so daß sich eine leichtgängige Relativverschiebung ergibt.

Der mindestens eine Mitnahmekörper 36 ist zwischen dem Kopf 14 und dem Gehäuse 12 hinsichtlich seiner Position in Längsrichtung , also in Richtung etwa parallel zur Längsmittelachse 8, führungsfrei angeordnet und mittels eines elastischen Spanngliedes 39 von außen nach innen mit einer Andrückkraft beaufschlagt, die den mindestens einen Mitnahmekörper 36 in dieser genannten Position hält, d.h. verhindert, daß der Mitnahmekörper 36 in Fig. 1 in den Längsnuten 37, 38 nach unten herabfällt und dann bei der Relativverschiebung zwischen dem Kopf 14 und dem Gehäuse 12 nicht mehr abrollen kann (DE-OS 43 14 235).

Wie sich aus Fig. 1 ergibt, ist die je Mitnahmekörper 36 vorgesehene Längsnut 37 im Kopf 14 als in Querrichtung durchgängiger Längsschlitz 40 innerhalb der Zylinderwandung 15 des Kopfes 14 ausgebildet. Der mindestens eine Mitnahmekörper 36 greift in Querrichtung durch den zugeordneten Längsschlitz 40 im Kopf 14 hindurch und steht zumindest geringfügig über die Außenseite 41 des Kopfes 40 im Bereich dieses Längsschlitzes 40 vor.

Das elastische Spannglied 39 besteht in besonders vorteilhafter, einfacher Weise aus einem Umfangsspannglied 42, das den Kopf 14 auf dessen Außenseite 41 im Bereich des mindestens einen Mitnahmekörpers 36 zumindest teilweise umfaßt und außen an dem vorstehenden Teil des mindestens einen Mitnahmekörpers 36 angreift und dort die von außen nach innen gerichtete Andrückkraft entfaltet. Das Umfangsspannglied 42 ist aus einem elastisch federnden Ringteil, z.B. einem Ring oder einer Zylinderhülse, insbesondere aus Metall, gebildet. Es ist in axialer Längsrichtung am Kopf 14, insbesondere auf dessen Außenseite 41, festgelegt. In der Außenseite 41 ist hierzu eine Ringaufnahme 43 mit oberer Axialschulter 44 enthalten, an der das Umfangsspannglied 42 in Achsrichtung gemäß Fig. 1 nach oben axial fixiert ist. Die Fixierung auf der gegenüberliegenden Seite, in Fig. 1 nach unten, geschieht mittels eines Sprengringes 45 an der Zylinderwandung 15 des Kopfes 14.

Das Umfangsspannglied 42 kann ein geschlossener Ringteil oder in axialer Längsrichtung an einer Stelle unterbrochen, z.B. geschlitzt, sein.

Die eingangs erläuterte Längenausgleichseinrichtung 31 befindet sich auf der Außenseite des Umfangsspanngliedes 42, das am in Fig. 1 unteren Ende auf seiner Außenseite eine Ringnut 60 enthält, innerhalb der mehrere Kugeln 61 mit einem Umfangsteil lagern. Im Ringraum 21 ist ferner ein das Umfangsspannglied 42 umgebender Stützring 62 mit einseitiger Schrägfläche 63 enthalten, der mittels der Druckfeder 32 mit seiner Schrägfläche 63 in axialer Längsrichtung, d.h. in Fig. 1 nach unten, gegen einen jeweils überstehenden Umfangsteil der Kugeln 61 gedrückt ist. Im Ringraum 21 , der zwischen dem Kopf 14 und der Außenseite des Umfangsspanngliedes 42 gebildet ist, ist ein etwa zylinderhülsenförmiger Kugelhalter 64 angeordnet, der in einer Axialrichtung, und zwar in Fig. 1 nach unten hin, an der Außenhülse 18 anliegt, und zwar an einer axialen Ringschulter, die im Übergangsbereich zum Hals 20 gebildet ist. Der Kugelhalter 64 enthält im in Fig. 1 oberen Bereich radial gerichtete Öffnungen 65, z. B. Bohrungen, in denen die Kugeln 61 gehalten sind. Dieser die Bohrungen 65 enthaltende Endbereich ist so abgeschrägt, daß er sich in Fig.1 nach oben hin verjüngt, wobei der Schrägungswinkel demjenigen der Schrägfläche 63 des Stützringes 62 zumindest im wesentlichen entspricht. Der Stützring 62 ist an diesem abgeschrägten, zugewandten Ende 87 des Kugelhalters 64 angeordnet, und zwar derart, daß der Stützring 62 mit seiner Schrägfläche 63 mit den an diesem Ende 87 radial zumindest geringfügig überstehenden Kugeln 61 in Berührung steht.

Wirkt von der Maschinenspindel, Werkzeugaufnahme od. dgl. und von der Aufnahme 11 her eine axial gerichtete Druckkraft bei axial abgestütztem Werkzeug 27, so werden die Kugeln 61 von der Flanke der Ringnut 60 des Umfangsspanngliedes 42 beaufschlagt. Je stärker die Kraft ist, umso stärker ist diese Beaufschlagung der Kugeln 61. Wird eine durch die Druckfeder 32 und die Schräge der Schrägfläche 63 des Stützringes 62 vorgegebene Gegenkraft überschritten, wandern die Kugeln 61 nach außen unter Verschiebung des Stützringes 62 gegen die Wirkung der Druckfeder 32. Dadurch wird für den Anschnitt z.B. eines Gewindebohrers ein gewünschter, einstellbarer Druck vorgegeben. Die Druckfeder 32 kann sodann bei der Relativverschiebung zwischen dem Kopf 14 und dem Gehäuse 12 einen Längenausgleich auf Druck bewirken.

Wird gegensinnig bei axial festgehaltenem Werkzeug 27 und Gehäuse 12 die Aufnahme 11 mit Kopf 14 axial in Fig. 1 nach oben gezogen, so werden die in der Ringnut 60 lagernden Kugeln 61 und über die Kugeln 61 der Kugelhalter 64 mitsamt dem an den Kugeln 61 anliegenden Stützring 62 mit dem Kopf 14 nach oben bewegt, wodurch die Druckfeder 32 ebenfalls auf Druck belastet ist und somit ein Längenausgleich zwischen dem Kopf 14 und dem Gehäuse 12 in Zugrichtung ermöglicht ist.

Der Werkzeughalter 9 ist ferner mit einer inneren Kühlmittelführung versehen, die besonders einfach gestaltet ist, was dadurch erreicht ist, daß die Längenausgleichseinrichtung 31 nach außen und in den äußeren Umfangsbereich der Zylinderwandung 15 verlagert ist. Im einzelnen weist das Schnellwechselfutter 10 ein zentrales inneres, der Kühlmittelführung dienendes Rohr 66 auf, das mit einem in Fig. 1 oberen Ende an der Aufnahme 11 befestigt ist und das sich von dort in die koaxiale Zylinderöffnung 16 und in eine zentrale Bohrung 67 des Gehäuses 12 hineinerstreckt. Die Bohrung 67 enthält einen an beiden axialen Enden mittels Dichtungsringen 68, 69 abgedichteten Ringraum 70 für das Kühlmittel, der somit innenseitig vom Rohr 66 und außen von der Bohrung 67 begrenzt ist. Der Ringraum 70 steht einerseits über mindestens einen Kanal 71 im Rohr 66, z.B. einer Bohrung in der Rohrwand, mit dem Inneren 72 des Rohres 66 in Verbindung. Andererseits ist der Ringraum 70 mit Kanälen 73, 74 im Gehäuse 12 verbunden, von denen der Kanal 73 z.B. radial und der Kanal 74 z.B. etwa achsparallel verläuft, wobei beide Kanäle 73, 74 im wesentlichen außerhalb der Mitte des Gehäuses 12 verlaufen. Der Kanal 74 führt bis zur koaxialen zylindrischen Öffnung 24 des Gehäuses 12.

Das freie, in Fig. 1 unten befindliche Ende des Rohres 66 ist geschlossen, z.B. durch einen Stopfen verschlossen. Es erstreckt sich durch eine zentrale axiale Bohrung 75 im Gehäuse 12 hindurch, die im Durchmesser größer ist und z.B. als Gewindebohrung ausgebildet ist. Das Ende des Rohres 66 erstreckt sich dort in einen Raum 76 hinein, der im Inneren eines etwa topfförmigen Abschlußgliedes 77 gebildet und nach unten abgeschlossen ist. Das Abschlußglied 77 ist mit einem Zapfen in die Bohrung 75 eingeschraubt und somit am Gehäuse 12 befestigt.

Das Abschlußglied 77 ist von einem Sperring 78 umgeben, der in der zylindrischen Öffnung 24 des Gehäuses 12 axial verschiebbar gehalten ist und bedarfsweise auch in Umfangsrichtung relativ zum Gehäuse 12, insbesondere dessen Zylinderwandung 23,drehbar sein kann und demgegenüber mittels eines Dichtungsringes 79 abgedichtet ist.

Das Abschlußglied 77 weist am axialen Ende zumindest einen radial auskragenden Vorsprung 80 auf, insbesondere eine Ringschulter, wobei der Vorsprung 80 als Anschlag für den Sperring 78 bei entnommenem Schnellwechseleinsatz 26 dient. Der Sperring 78 weist in Zuordnung dazu an einem Ende mindestens einen radial nach innen vorstehenden Anschlag 81 auf, z.B. eine Anschlagschulter. Wird der Schnellwechseleinsatz 26 entnommen und dadurch der Sperring 78 in Axialrichtung frei, der über eine stirnseitige Dichtung 82,die auch als Kupplungsglied, z.B. Reibglied, dienen kann, dicht gegen die zugewandte Stirnseite des Schnellwechseleinsatzes angedrückt ist, so wird der Sperrring 78 durch die Kraft einer ihn in Umfangsrichtung und/oder axial belastenden Feder 83 in Fig.1 nach unten verschoben,bis der Anschlag 81, insbesondere die Anschlagschulter, am Vorsprung 80, insbesondere der Ringschulter, des Abschlußgliedes 77 anschlägt und dadurch ein Herausdrücken des Sperringes 78 verhindert ist. Wird hiernach wieder ein Schnellwechseleinsatz 26 eingesetzt,so wird dadurch der Sperring 78 gegen die Wirkung der Feder 83 in die Position gemäß Fig.2 eingeschoben. Die Feder 83 kann mit einem Ende am Sperring 78 und mit dem anderen Ende am Gehäuse 12 fixiert sein.

Das bis zum Kanal 74 gelangende Kühlmittel wird durch Kanäle des Abschlußgliedes 77 und des Sperringes 78 in Fig. 1 nach unten geführt, so daß es durch eine zentrale Öffnung 51 im Schnellwechseleinsatz 26 und z.B. durch eine Öffnung 52 im Werkzeug 27 hindurchgelangen kann. Hierzu weist der Sperrring 78 am in Fig. 1 oberen Ende mindestens einen Querkanal 84, z.B. eine Quernut, auf, die mit dem Kanal 74 in Verbindung steht. Der Querkanal 84 steht mit einem Ringraum 85 in Verbindung, der umfangsseitig zwischen dem Abschlußglied 77 und dem Sperring 78 gebildet ist.

Das Abschlußglied 77 weist im Bereich des freien, in Fig.1 unteren, Endes außenseitig mindestens eine Ausnehmung 86 oder zwei diametral gegenüberliegende Ausnehmungen dieser Art auf, wobei die Ausnehmung 86 mit dem Ringraum 85 zur Kühlmittelführung in Verbindung steht.

Das Kühlmittel wird z.B. in das Innere des Endes 13 der Aufnahme 11 eingeführt und gelangt in das Innere 72 des Rohres 66, von dem es über den mindestens einen Kanal 71 in den Ringraum 70 gelangt und von dort über die Kanäle 73, 74 zu dem mindestens einen Querkanal 84 am inneren Ende des Sperringes 78. Vom mindestens einen Querkanal 84 gelangt das Kühlmittel durch den Ringraum 85 und die mindestens eine Ausnehmung 86, wo es austritt und in die innere zentrale Öffnung 51 des Schnellwechseleinsatzes 26 eintritt.

Das Abschlußglied 77 und der Sperring 78 können so gestaltet sein, daß bei entnommenem Schnellwechseleinsatz 26 und weiter nach unten verschobenem Sperring 78 der Kühlmitteldurchlaß vom Ringraum 85 nach außen gesperrt ist, so daß bei entnommenem Schnellwechseleinsatz 26 kein Kühlmittel austreten kann.

Die beschriebene innere Kühlmittelführung mit Hilfe des in der Aufnahme 11 befestigten Rohres 66 ist besonders einfach und kostengünstig. Da bei einer Relativverschiebung zwischen dem Gehäuse 12 und dem Kopf 14 die Drucksäule des unter Druck stehenden Kühlmittels nicht mit bewegt wird, ist eine etwaige Verfälschung der Relativposition zwischen dem Kopf 14 und dem Gehäuse 12 ausgeschlossen. Ferner ist eine Druckentlastung erreicht.

Der im Inneren des Abschlußgliedes 77 gebildete Raum 76, in den sich das freie Ende des Rohres 66 hineinerstreckt und bei der Relativbewegung zwischen dem Kopf 14 und dem Gehäuse 12 mehr oder weniger tief eintaucht, ist nach außen entlüftet, wodurch verhindert ist, daß sich hier ein Druck aufbauen kann, der die Relativbewegung beeinträchtigen könnte. Zur Entlüftung dient im Gehäuse 12 ein Entlüftungskanal 29, der hier z. B. aus mindestens einem Radialkanal besteht, der nach außen bis zu einer Längsnut 38 geführt ist und somit über die Längsnut 38, ferner die Längsnut 37 und den Ringraum 21 entlüftet ist. Der Entlüftungskanal 29 steht im inneren Bereich des Gehäuses 12 mit einem zentralen Raum 30 in Verbindung, der seinerseits mit dem Raum 76 im Abschlußglied 77 komuniziert. Bei einem nicht gezeigten Ausführungsbeispiel kann dies z. B. durch eine oder mehrere Öffnungen im Rohr 66, insbesondere in der Rohrwandung, geschehen. Beim gezeigten Ausführungsbeispiel ist zwischen dem Abschlußglied 77 und dem sich in letzteres hineinerstreckenden freien Ende des Rohres 66 ein Ringraum 88 belassen, der die Verbindung zwischen dem Raum 76 und dem zentralen Raum 30 und Entlüftungskanal 29 herstellt, so daß in besonders einfacher Weise dadurch der Raum 76 entlüftet ist.

Wie ersichtlich ist, enthält der Werkzeughalter 9 somit eine zentrale innere Kühlmittelführung vom Kopf 14 durch das Gehäuse 12 bis hin zum Schnellwechseleinsatz 26 und in diesen hinein. Eine weitere wesentliche Besonderheit des Werkzeughalters 9 besteht darin, daß eine auf eine Relativbewegung zwischen dem Kopf 14 und dem Gehäuse 12 ansprechende innere Signaleinrichtung 47 zur Störungssignalabgabe insbesondere bei schadhaftem oder zerstörtem Werkzeug 27 vorgesehen ist. Soweit die Signaleinrichtung 47 in den Werkzeughalter 9 integriert ist, ist diese so gestaltet, daß die Signaleinrichtung 47 auf eine axiale Verschiebung des Kopfes 14 relativ und in Richtung zum Gehäuse 12 anspricht. Die innere Signaleinrichtung 47 weist eine auf den Kühlmittelfluß und/oder Kühlmitteldruck einwirkende Sperreinrichtung 46 auf, die bei einer Relativbewegung, insbesondere bei einer axialen Relativverschiebung, zwischen dem Kopf 14 und dem Gehäuse 12 den Kühlmittelfluß sperrt, wobei der sich daraufhin ergebende erhöhte Staudruck des Kühlmittels im Bereich der Zuführung des Kühlmittels, also zweckmäßigerweise außerhalb des Werkzeughalters 9, als Störungssignal erfaßt und ausgewertet wird. Ein Teil dieser Sperreinrichtung 46 wird vom Rohr 66 gebildet, welches über einen mit dem Inneren 72 in Verbindung stehenden Auslaß 71 in der Rohrwand die Zuführung des Kühlmittels zu einem Einlaß 48 der Kanäle 73, 74 im Gehäuse 12 steuert. Dieser Einlaß 48 des Kanales 73, 74 im Gehäuse 12 ist bei einer Axialverschiebung der Aufnahme 11 mit Kopf 14 und mit dem daran befestigten Rohr 66 relativ und in Richtung zum Gehäuse 12 (Fig. 2) vom Rohr 66 verschließbar, wie aus Fig. 2 ersichtlich ist. In dieser durch die Wandung des Rohres 66 verschlossenen Position des Einlasses 48 ist die Kühlmittelzufuhr zum Gehäuse 12, insbesondere in den Kanal 73 und 74, gesperrt. Es stellt sich daraufhin im Inneren 72 des Rohres 66 ein erhöhter Staudruck ein, der ein Störungssignal dafür ist, daß das Werkzeug 27 in irgendeiner Weise schadhaft geworden oder gar zerstört worden ist. Dies tritt z.B. dann ein, wenn beim Gewindebohren der Gewindebohrer als Werkzeug 27 frißt oder bricht oder ein Bohrwerkzeug als Werkzeug 27 im Laufe der Bearbeitung stumpf wird und deswegen nicht mehr schneidet. Dann wird vom Werkstück her das Werkzeug 27 und somit der Schnellwechseleinsatz 26 relativ zum weiterhin angetriebenen Kopf 14 an einer Drehung gehindert, wobei z.B. eine im Schnellwechseleinsatz 26 enthaltene Sicherheitskupplung anspricht und eine Trennung des Drehantriebes bewirkt, wobei aber der in Axialrichtung in Fig. 1 von oben nach unten gerichtete, von der Maschine her wirkende Vorschub weiterhin wirksam ist und darüber somit die Aufnahme 11 mit ihrem Kopf 14 und dem Rohr 66 axial relativ und in Richtung zum Gehäuse 12 verschoben wird. Bei dieser Verschiebung gelangt der Auslaß 71 des Rohres 66 in Fig. 1 und 2 weiter nach unten und aus dem Bereich des Einlasses 48 heraus, der somit von der Außenfläche des Rohres 26 verschlossen wird. Der sich dadurch im Bereich der Kühlmittelzuführung ergebende höhere Staudruck kann z.B. im Bereich der Maschine mittels geeigneter Meßeinrichtungen erfaßt und als Signal dafür aufgenommen werden, daß eine Störung vorliegt. Somit kann also ein defektes Werkzeug 27 automatisch erfaßt werden, so daß aufgrund eines betreffenden Signales ein Austausch des Werkzeuges 27 vorgenommen werden kann, bevor der nächste Bearbeitungsvorgang beginnt. Da das Verschließen und Sperren des Kühlmittelflusses nicht schleichend sondern relativ schlagartig erfolgt, ergibt sich eine relativ schlagartige Druckänderung des Kühlmittels. Dies verbessert die Erzeugung eindeutiger Meßwerte und erleichtert somit eine präzise Ermittlung einer Staudruckerhöhung.

Bei einem anderen, nicht gezeigten Ausführungsbeispiel ist die Signaleinrichtung 47 so gestaltet, daß sie auf eine axiale Relativverschiebung des Kopfes 14 relativ zum Gehäuse 12 und dabei in Richtung vom Gehäuse weg, d.h. in Fig. 1 und 2 nach oben hin, anspricht. Die Sperreinrichtung 46 ist in diesem Fall so, wie vorstehend beschrieben ist, gestaltet, wobei allein die Abweichung besteht, daß dann bei dieser Relativverschiebung in Fig. 1 und 2 nach oben der Auslaß 71 des Rohres 66 vom das Rohr 66 umschließenden Halsteil des Gehäuses 12 verschlossen wird und dadurch der Kühlmittelfluß vom Auslaß 71 zum Einlaß 48 und zum Kanal 73 hin gesperrt wird.

Es versteht sich, daß die Signaleinrichtung 47 im Zusammenhang mit den verschiedensten Arten von Kühlmittel funktionsfähig ist, und zwar sowohl bei flüssigem Kühlmittel als auch bei gasförmigem Kühlmittel, z.B. Luft oder dergleichen.

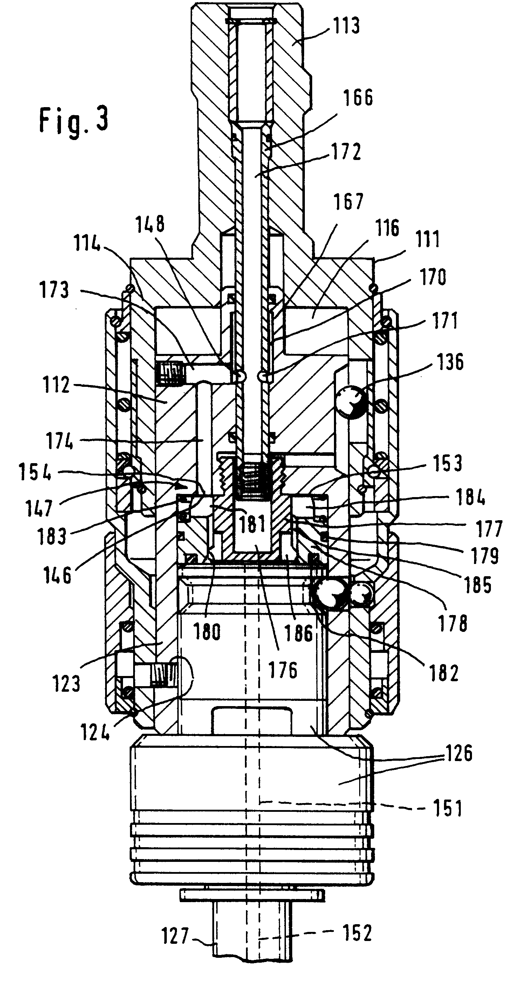

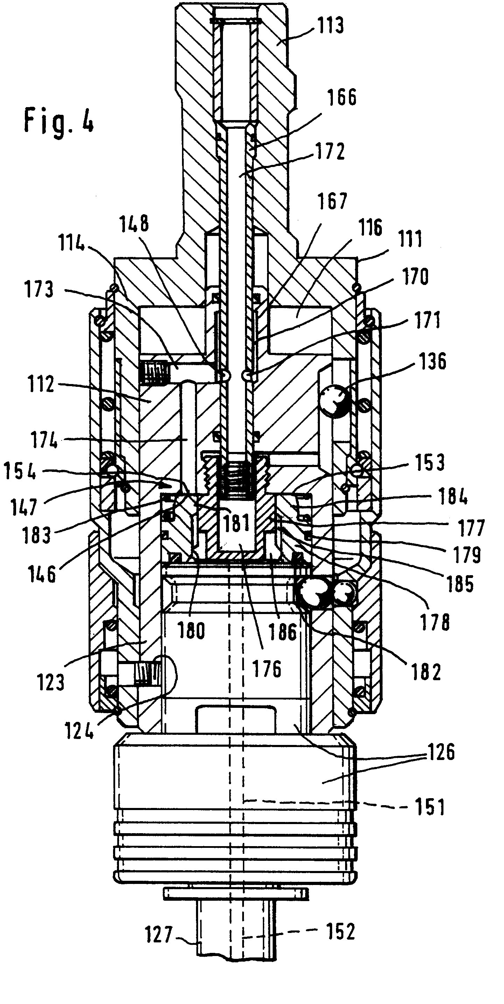

Bei dem in Fig. 3 und 4 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Wie ersichtlich ist, entspricht der Werkzeughalter gemäß dem zweiten Ausführungsbeispiel in Fig. 3 und 4 vollständig demjenigen gemäß dem ersten Ausführungsbeispiel. Dies gilt auch für den Sperring 178, der am oberen Ende eine stirnseitige Planfläche 153 aufweist, die von dem mindestens einen Querkanal 184 z.B. in Radialrichtung durchzogen ist. Dieser Querkanal 184 kann diametral durchlaufen und hinsichtlich der Querabmessung relativ klein sein. Der Querkanal 184 steht mit der Ausnehmung 186 des Abschlußgliedes 177 in Verbindung und dient in der in Fig. 3 gezeigten Relativdrehstellung des Sperringes 178 relativ zum Gehäuse 112 zur Kühlmittelleitung. Das in das Innere 172 des Rohres 166 eingeleitete Kühlmittel kann somit aus den Kanälen 171 austreten und in den Einlaß 148 eintreten und von dort über die Kanäle 173 und 174 aus der Öffnung 154 austreten und sodann über den Querkanal 184 des Sperrings 178 und z.B. durch den Ringraum 185 zur Ausnehmung 186 im Abschlußglied 177 gelangen, so daß es von dort in die Öffnung 151 des Schnellwechseleinsatzes 126 gelangt und von dort durch die Öffnung 152 des Werkzeuges 127 hindurch bis zum nicht gezeigten Ende des Werkzeuges, aus dem das Kühlmittel austreten kann. Da der Sperring 178 unter dem Druck des Kühlmittels und durch die Kraft der ihn belastenden Feder 183 in Fig. 3 nach unten und mit der Dichtung 182 gegen die Stirnseite des Schnellwechseleinsatzes gepreßt wird, kann in diesem Bereich das Kühlmittel nicht nach außen austreten. Durch den umfangsseitigen Dichtungsring 179 ist ebenfalls eine Abdichtung gegen Austreten des Kühlmittels erreicht.

Beim Werkzeughalter gemäß Fig. 3 und 4 spricht die innere Signaleinrichtung 147 auf eine Relativdrehung zwischen dem Gehäuse 112 einerseits und dem Sperring 178 andererseits an. Die Sperreinrichtung 146 sperrt bei einer Relativdrehung zwischen dem Gehäuse 112 und dem Sperring 178 in einer Drehrichtung den Kühlmittelfluß, wie dies in Fig. 4 zu sehen ist. Diese in Fig. 4 gezeigte Sperrstellung ist dadurch erreicht, daß z.B. bei einem Schaden am Werkzeug 127 und weiterhin über die Aufnahme 111 anstehendem Antrieb das Werkzeug 127 und der Schnellwechseleinsatz 126 in Umlaufrichtung gestoppt werden. Der im System auch auf den Sperrring 178 einwirkende Druck des Kühlmittels bewirkt, daß der Sperring 178 mit der stirnseitigen Dichtung 182 fest gegen die zugewandte Stirnseite des Schnellwechseleinsatzes 126 angepreßt ist. Die Dichtung 182 dient als Kupplungsmittel, z.B. Reibmittel, die angesichts des wirkenden hohen Kühlmitteldruckes und der festen Anpressung des Sperringes 178 gegen den Schnellwechseleinsatz 126 beim Abstoppen des letzteren somit eine Kupplung des Sperringes 178 mit dem Schnellwechseleinsatz 126 zur Folge hat. Wird somit der Schnellwechseleinsatz 126 aus den genannten Gründen gestoppt, so wird über das genannte Kupplungsmittel 182 auch der Sperring 178 gestoppt, während die Aufnahme 111 mitsamt dem Gehäuse 112 in Umfangsrichtung zumindest über einen kleinen Umfangswinkel noch weiterhin umläuft. Dies hat eine Relativdrehung zwischen dem stehenden Sperring 178 einerseits und dem noch umlaufenden Gehäuse 112 andererseits zur Folge. Dabei gelangt die ausmündende Öffnung 154 des Kanals 174 aus dem Bereich des Querkanals 184 im Sperring 178 heraus und in einen in Umfangsrichtung benachbarten Bereich auf der stirnseitigen Planfläche 153 des Sperringes 178, die die Öffnung 154 versperrt. Dadurch wird das bis zum Kanal 174 geführte Kühlmittel nun daran gehindert, über den Querkanal 184, den Ringraum 185 und die Ausnehmung 186 bis hin zur Öffnung 151 zu gelangen. Der Kühlmitteldurchlaß wird somit gesperrt, wobei der sich daraufhin ergebende erhöhte Staudruck des Kühlmittels im Bereich der Zuführung des Kühlmittels, z.B. zweckmäßigerweise außerhalb des Werkzeughalters, als Störungssignal erfaßt und ausgewertet wird.

Die Sperreinrichtung 146 weist beim zweiten Ausführungsbeispiel die stirnseitige Planfläche 153 des Sperringes 178 einerseits und die über letztere verschließbare Öffnung 154 am Ende des Kanals 174 andererseits auf. Der Sperring 178 kann nach Absperrung des Kühlmittelflusses gemäß Fig. 4 durch gegensinnige Rückdrehung zurück in die Position gemäß Fig. 3 den Durchlaß wieder herstellen.

Beim zweiten Ausführungsbeispiel in Fig. 3 und 4 ist der Sperring 178 somit in der Öffnung 124 des Gehäuses 112 relativ zu letzterem drehbar gehalten. Dabei ist der Sperrring 178 mittels Federkraft in seine Freigabestellung zurückdrehbar. Die Federkraft kann von der den Sperring 178 in der Öffnung 124 des Gehäuses 112 axial beaufschlagenden Feder 183 aufgebracht werden. Statt dessen kann aber auch eine zusätzliche, in Umfangsrichtung wirksame Feder auf den Sperring 178 wirken. Die Feder 183 kann mit einem Ende am Sperring 178 und mit dem anderen Ende am Gehäuse 112 in Umfangsrichtung fixiert sein und zusätzlich zur axialen Federkraft eine in Umfangsrichtung wirkende Federkraft erzeugen. Diese die Rückstellung des Sperringes 178 in die Position gemäß Fig. 3 bewirkende Federkraft muß nicht unbedingt groß sein; denn wenn die in Fig. 4 gezeigte Sperrstellung erreicht worden ist und dadurch ein Störsignal erzeugt worden ist, wird die Maschine ausgeschaltet und in ihre Ausgangsstellung zurück gebracht. Dann wird der Schnellwechseleinsatz 126 entnommen. Der Sperring 138 wird dadurch frei, so daß die Feder 183 in der Lage ist, den Sperring 178 in die Position gemäß Fig. 3 zurückzudrehen. In den Fällen, in denen die Feder 183 die Rückstellung des Sperringes 178 nicht bewirkt haben sollte, wird der Sperring 178 spätestens bei gegensinnigem Umlauf des Werkzeughalters wieder in die in Fig. 3 gezeigte Ausgangsstellung zurückgedreht, in der ein Kühlmitteldurchlaß möglich ist.

## Patentansprüche

1. Werkzeughalter, insbesondere Schnellwechselfutter, vorzugsweise zum Gewindeschneiden, Gewindeformen, Bohren od.dgl., mit einer Aufnahme (11;111), die mit einem Ende (13;113) in einer Maschinenspindel, Werkzeugaufnahme od.dgl. aufnehmbar ist und am gegenüberliegenden Ende einen Kopf (14;114) aufweist, der eine koaxiale zylindrische Öffnung (16;116) enthält, in der undrehbar, jedoch in axialer Längsrichtung relativverschiebbar ein Gehäuse (12;112) aufgenommen und geführt ist, das eine koaxiale zylindrische Öffnung (24;124) enthält, in die ein Schnellwechseleinsatz (26;126) für ein Werkzeug (27;127) einsetzbar und damit kuppelbar ist, mit mindestens einem zwischen dem Kopf (14;114) und dem Gehäuse (12;112) angeordneten Mitnahmekörper (36;136), der bei der Relativverschiebung zwischen Kopf (14;114) und Gehäuse (12;112) abrollen kann und der Drehmomentübertragung zwischen beiden dient, und mit einer zentralen inneren Kühlmittelführung vom Kopf (14;114) durch das Gehäuse (12;112) zum Schnellwechseleinsatz (26;126),
**gekennzeichnet durch**
eine auf eine Relativbewegung zwischen dem Kopf (14;114) und dem eingesetzten Schnellwechseleinsatz (26;126) ansprechende innere Signaleinrichtung (47;147) zur Störungssignalgabe, insbesondere bei schadhaftem oder zerstörtem Werkzeug (27;127), die eine auf den Kühlmittelfluß und/oder Kühlmitteldruck einwirkende Sperreinrichtung (46; 146) aufweist.

2. Werkzeughalter nach Anspruch 1,
**dadurch gekennzeichnet**,
daß die Sperreinrichtung (46;146) bei einer Relativbewegung zwischen dem Kopf (14;114) und dem Schnellwechseleinsatz (26;126) den Kühlmittelfluß sperrt und der sich ergebende erhöhte Staudruck des Kühlmittels als Störungssignal erfaßt wird.

3. Werkzeughalter nach einem der Ansprüche 1 oder 2,
**gekennzeichnet durch**
ein zentrales, inneres, der Kühlmittelführung dienendes Rohr (66;166), das mit einem Ende an der Aufnahme (11;111) befestigt ist und das sich von dort in den Kopf (14;114) und in eine zentrale Bohrung (67;167) des Gehäuses (12;112) hineinerstreckt und über einen Auslaß (71;171) in der Rohrwand Kühlmittelin einen vom Rohr (66;166) gesteuerten Einlaß (48;148) eines Kanals (73;74;173;174) im Gehäuse (12;112) überleitet.

4. Werkzeughalter nach Anspruch 3,
**dadurch gekennzeichnet**,
daß der Einlaß (48;148) des Kanals (73,74;173;174) aus einem Ringraum (70;170) des Gehäuses (12;112) gebildet ist, der an beiden axialen Enden abgedichtet ist und innenseitig vom Rohr (66;166) begrenzt ist.

5. Werkzeughalter nach einem der Ansprüche 1 bis 4,
**dadurch gekennzeichnet**,
daß der Auslaß (71;171) des Rohres (66;166) aus einer oder mehreren Radialbohrungen gebildet ist, die einerseits mit dem Inneren (72;172) des Rohres (66;166) und andererseits mit dem Einlaß (48;148), insbesondere dem Ringraum (70;170), des Gehäuses (12;112) in Verbindung stehen.

6. Werkzeughalter nach einem der Ansprüche 1 bis 5,
**dadurch gekennzeichnet**,
daß der Einlaß (48;148), insbesondere der Ringraum (70;170), mit z.B. außerhalb der Mitte verlaufenden Kanälen (73,74;173,174) im Gehäuse (12;112) verbunden ist, welche bis zur zylindrischen Öffnung (24;124) des Gehäuses (12;112) führen.

7. Werkzeughalter nach einem der Ansprüche 1 bis 6,
**dadurch gekennzeichnet**,
daß im Gehäuse (12;112) ein - vorzugsweise etwa topfförmiges - Abschlußglied (77;177) enthalten ist, in dessen Inneres (76:176) das Rohr (66;166) mit seinem Ende eintaucht.

8. Werkzeughalter nach einem der Ansprüche 1 bis 7,
**dadurch gekennzeichnet**,
daß das Innere des Abschlußgliedes (77/177) zur inneren Öffnung (24;124) des Gehäuses (12;112) hin abgeschlossen ist.

9. Werkzeughalter nach einem der Ansprüche 1 bis 8,
**dadurch gekennzeichnet**,
daß das Innere des Abschlußgliedes (77;177) entlüftet ist.

10. Werkzeughalter nach einem der Ansprüche 1 bis 9,
**dadurch gekennzeichnet**,
daß das Abschlußglied (77;177) am axialen Ende zumindest einen radial auskragenden Vorsprung (80;180) aufweist.

11. Werkzeughalter nach einem der Ansprüche 1 bis 10,
**dadurch gekennzeichnet**,
daß das Abschlußglied (77;177) am axialen Ende eines radial auskragende Ringschulter aufweist.

12. Werkzeughalter nach einem der Ansprüche 1 bis 11,
**dadurch gekennzeichnet**,
daß das Abschlußglied (77;177) im Bereich seines unteren freien Endes außenseitig mindestens eine Ausnehmung (86;186) aufweist, die zur Umfangsseite und zum freien unteren Ende des Abschlußgliedes (77;177) offen ist und der Durchleitung des Kühlmittels dient.

13. Werkzeughalter nach einem der Ansprüche 1 bis 12,
**dadurch gekennzeichnet**,
daß in der inneren zylindrischen Öffnung (24;124) des Gehäuses (12;112) ein Sperring (78;178) gehalten ist.

14. Werkzeughalter nach einem der Ansprüche 1 bis 13,
**dadurch gekennzeichnet**,
daß der Sperring (78;178) in Umfangsrichtung gegenüber dem Gehäuse (12;112), insbesondere dessen Zylinderwandung (23;123), mittels eines Dichtungsringes (79;179) abgedichtet ist.

15. Werkzeughalter nach einem der Ansprüche 1 bis 14,
**dadurch gekennzeichnet**,
daß der Sperring (78;178) das Abschlußglied (77;177) umgibt unter Bildung eines umfangsseitigen Ringraumes (85;185) zwischen beiden.

16. Werkzeughalter nach einem der Ansprüche 1 bis 15,
**dadurch gekennzeichnet**,
daß der Sperring (78;178) an einem Ende mindestens einen radial nach innen vorstehenden Anschlag (81;181) aufweist, mit dem der Sperring (78;178) bei entnommenem Schnellwechseleinsatz (26;126) am Vorsprung (80;180) des Abschlußgliedes (77;177) anschlagen kann.

17. Werkzeughalter nach einem der Ansprüche 1 bis 16,
**dadurch gekennzeichnet**,
daß der Sperring (78;178) am oberen Ende mindestens einen Querkanal (84;184) aufweist, der mit der Ausnehmung (86;186) des Abschlußgliedes (77;177), z.B. über den Ringraum (85;185) zwischen dem Sperring (78; 178) und dem Abschlußglied (77;177), in Verbindung steht und zur Kühlmittelleitung dient.

18. Werkzeughalter nach einem der Ansprüche 1 bis 17,
**dadurch gekennzeichnet**,
daß der Sperring (78;178) durch die Kraft einer ihn belastenden Feder (83;183) in der Öffnung (24;124) nach unten verschiebbar ist.

19. Werkzeughalter nach einem der Ansprüche 1 bis 18,
**dadurch gekennzeichnet**,
daß der Sperring (78;178) an der unteren Stirnseite eine Dichtung (82;182) aufweist, mit der der Sperring (78; 178) durch den Kühlmitteldruck -und/oder die ihn belastende Feder (83; 183) dicht gegen die zugewandte Stirnseite eines eingesetzten Schnellwechseleinsatzes (26;126) andrückbar ist.

20. Werkzeughalter nach einem der Ansprüche 1 bis 19,
**dadurch gekennzeichnet**,
daß die innere Signaleinrichtung (47) auf eine axiale Verschiebung des Kopfes (14) relativ und in Richtung zum Gehäuse (12) oder dazu gegensinnig anspricht.

21. Werkzeughalter nach einem der Ansprüche 1 bis 20,
**dadurch gekennzeichnet**,
daß die Sperreinrichtung (46) bei einer axialen Relativverschiebung des Kopfes (14) relativ und in Richtung zum Gehäuse (12) oder dazu gegensinnig den Kühlmittelfluß sperrt und der sich ergebende erhöhte Staudruck des Kühlmittels als Störungssignal erfaßt wird.

22. Werkzeughalter nach einem der Ansprüche 1 bis 21,
**dadurch gekennzeichnet**,
daß der Einlaß (48) des Kanals (73;74) im Gehäuse (12) bei einer Axialverschiebung des Kopfes (14) mit dem Rohr (66) relativ und in Richtung zum Gehäuse (12) oder dazu gegensinnig vom Rohr (66) verschließbar und dadurch der Kühlmittelfluß sperrbar ist.

23. Werkzeughalter nach einem der Ansprüche 1 bis 19,
**dadurch gekennzeichnet**,
daß die innere Signaleinrichtung (147) auf eine Relativdrehung zwischen dem Gehäuse (112) und dem Sperring (178) anspricht.

24. Werkzeughalter nach Anspruch 23,
**dadurch gekennzeichnet**,
daß die Sperreinrichtung (146) bei einer Relativdrehung zwischen dem Gehäuse (112) und dem Sperring (178) in einer Drehrichtung den Kühlmittelfluß sperrt und der sich ergebende erhöhte Staudruck des Kühlmittels als Störsignal erfaßt wird.

25. Werkzeughalter nach Anspruch 23 oder 24,
**dadurch gekennzeichnet**,
daß der Sperring (178) an seinem oberen Ende eine stirnseitige Planfläche (153) aufweist, mit der der Sperrring (178) die in diesem Bereich ausmündende Öffnung (154) des Kanals (173,174) im Gehäuse (112) je nach Relativdrehstellung des Sperringes (178) relativ zum Gehäuse (112) zur Absperrung des Kühlmittelflusses versperren kann bzw. bei gegensinniger Rückdrehung freigeben kann.

26. Werkzeughalter nach einem der Ansprüche 1 bis 25,
**dadurch gekennzeichnet**,
daß der Sperring (78;178) in der Öffnung (24;124) relativ zum Gehäuse (12;112) drehbar gehalten ist.

27. Werkzeughalter nach einem der Ansprüche 1 bis 26,
**dadurch gekennzeichnet,**
daß der Sperring (78;178) mittels Federkraft in seine Freigabestellung zurückdrehbar ist.

28. Werkzeughalter nach einem der Ansprüche 1 bis 27,
**dadurch gekennzeichnet**,
daß die Federkraft von der den Sperring (78;178) in der Öffnung (24;124) des Gehäuses (12;112) nach unten beaufschlagenden Feder (83;183) aufgebracht wird.

29. Werkzeughalter nach einem der Ansprüche 1 bis 28,
**dadurch gekennzeichnet**,
daß die Feder (83;183) mit einem Ende am Sperring (78; 178) und mit dem anderen Ende am Gehäuse (12;112) in Umfangsrichtung fixiert ist und zusätzlich zur axialen Federkraft eine in Umfangsrichtung wirkende Federkraft erzeugt.

30. Werkzeughalter nach einem der Ansprüche 1 bis 29,
**dadurch gekennzeichnet**,
daß eine Relativdrehung des Schnellwechseleinsatzes (26;126) relativ zum Gehäuse (12;112) über Kupplungsmittel auf den Sperring (78;178) übertragen wird.

31. Werkzeughalter nach Anspruch 30,
**dadurch gekennzeichnet**,
daß als Kupplungsmittel die stirnseitige Dichtung (82; 182) des Sperringes (78;178) dient.

## Claims

1. Tool holder, in particular quick-change chuck, preferably for thread cutting, thread shaping, drilling or the like, with a receiver (11; 111) which can be received by one end (13; 113) in a machine spindle, tool receiver or the like and, at the opposite end, has a head (14; 114) containing a coaxial cylindrical orifice (16; 116) in which a housing (12; 112) is received and guided non-rotatably but relatively displaceably in an axial longitudinal direction, the housing (12; 112) containing a coaxial cylindrical orifice (24; 124) into which a quick-change insert (26; 126) for a tool (27; 127) can be inserted and coupled therewith, with at least one driving member (36; 136) which is arranged between the head (14; 114) and the housing (12; 112), is able to roll during the relative displacement between head (14; 114) and housing (12; 112) and serves to transmit the torque between the two, and with a central internal coolant guide from the head (14; 114) through the housing (12; 112) to the quick change insert (26; 126), characterised by an internal signalling device (47; 147), responding to a relative movement between the head (14; 114) and the inserted quick change insert (26; 126), for interference signal generation, in particular in the case of a faulty or damaged tool (27; 127), which has a blocking device (46; 146) acting upon the coolant flow and/or coolant pressure.

2. Tool holder according to claim 1, characterised in that the blocking device (46; 146) blocks the coolant flow during a relative movement between the head (14; 114) and the quick change insert (26; 126) and the resultant increased back-pressure of the coolant is detected as an interference signal.

3. Tool holder according to one of claims 1 or 2, characterised by a central internal pipe (66; 166) which serves to guide the coolant, is fastened on the receiver (11; 111) by one end, penetrates from there into the head (14; 114) and into a central bore (67; 167) of the housing (12; 112) and conveys coolant via an outlet (71; 171) in the pipe wall into an inlet (48; 148), controlled by the pipe (66; 166), of a duct (73, 74; 173, 174) in the housing (12; 112).

4. Tool holder according to claim 3, characterised in that the inlet (48; 148) of the duct (73; 74; 173; 174) is formed from an annular chamber (70; 170) of the housing (12; 112) which is sealed at both axial ends and is internally limited by the pipe (66; 166).

5. Tool holder according to one of claims 1 to 4, characterised in that the outlet (71; 171) of the pipe (66; 166) is formed from one or more radial bores which are connected, on the one hand, to the interior (72; 172) of the pipe (66; 166) and, on the other hand, to the inlet (48; 148), in particular the annular chamber (70; 170), of the housing (12; 112).

6. Tool holder according to one of claims 1 to 5, characterised in that the inlet (48; 148), in particular the annular chamber (70; 170) is connected, for example, to ducts (73, 74; 173, 174) in the housing (12; 112) which extend outside the centre and lead to the cylindrical orifice (24; 124) of the housing (12; 112).

7. Tool holder according to one of claims 1 to 6, characterised in that a preferably substantially pot-shaped closure element (77; 177) in whose interior (76; 176) the end of the pipe (66; 166) is submerged is contained in the housing (12; 112).

8. Tool holder according to one of claims 1 to 7, characterised in that the interior of the closure element (77; 177) is closed from the internal orifice (24; 124) of the housing (12; 112).

9. Tool holder according to one of claims 1 to 8, characterised in that the interior of the closure element (77; 177) is vented.

10. Tool holder according to one of claims 1 to 9, characterised in that the closure element (77; 177) has at least one radially protruding projection (80; 180) at its axial end.

11. Tool holder according to one of claims 1 to 10, characterised in that the closure element (77; 177) has a radially protruding annular shoulder at its axial end.

12. Tool holder according to one of claims 1 to 11, characterised in that the closure element (77; 177) has, externally in the region of its lower free end, at least one recess (86; 186) which is open toward the periphery and toward the free lower end of the closure element (77; 177) and serves to convey the coolant.

13. Tool holder according to one of claims 1 to 12, characterised in that a blocking ring (78; 178) is held in the internal cylindrical orifice (24; 124) of the housing (12; 112).

14. Tool holder according to one of claims 1 to 13, characterised in that the blocking ring (78; 178) is peripherally sealed from the housing (12; 112), in particular the cylindrical wall (23; 123) thereof, by means of a sealing ring (79; 179).

15. Tool holder according to one of claims 1 to 14, characterised in that the blocking ring (78; 178) surrounds the closure element (77; 177) so as to form a peripheral annular chamber (85; 185) between the two.

16. Tool holder according to one of claims 1 to 15, characterised in that the blocking ring (78; 178) has, at one end, at least one radially inwardly protruding stop (81; 181) with which the blocking ring (78; 178) can strike the projection (80; 180) of the closure element (77; 177) when the quick change insert (26; 126) is removed.

17. Tool holder according to one of claims 1 to 16, characterised in that the blocking ring (78; 178) has, at the upper end, at least one transverse duct (84; 184) which communicates with the recess (86; 186) of the closure element (77; 177), for example via the annular chamber (85; 185) between the blocking ring (78; 178) and the closure element (77; 177), and serves to convey coolant.

18. Tool holder according to one of claims 1 to 17, characterised in that the blocking ring (78; 178) can be displaced downwards in the orifice (24; 124) by the force of a spring (83; 183) loading it.

19. Tool holder according to one of claims 1 to 18, characterised in that the blocking ring (78; 178) has, on the lower end face, a seal (82; 182) with which the blocking ring (78; 178) can be pressed by the coolant pressure and/or the spring (83; 183) loading it tight against the facing end face of an inserted quick-change insert (26; 126).

20. Tool holder according to one of claims 1 to 19, characterised in that the internal signalling device (47) responds to an axial displacement of the head (14) relative to and in the direction of the housing (12) or in the opposite direction.

21. Tool holder according to one of claims 1 to 20, characterised in that the blocking device (46) blocks the flow of coolant during an axial relative displacement of the head (14) relative to and in the direction of the housing (12) or in the opposite direction and the resultant increased back pressure of the coolant is detected as an interference signal.

22. Tool holder according to one of claims 1 to 21, characterised in that the inlet (48) of the duct (73; 74) in the housing (12) can be closed by the pipe (66) during an axial displacement of the head (14) with the pipe (66) relative to and in the direction of the housing (12) or in the opposite direction and the coolant flow can be blocked thereby.

23. Tool holder according to one of claims 1 to 19, characterised in that the internal signalling device (147) responds to a relative rotation between the housing (112) and the blocking ring (178).

24. Tool holder according to claim 23, characterised in that the blocking device (146) blocks the coolant flow during a relative rotation between the housing (112) and the blocking ring (178) in one direction of rotation and the resultant increased back pressure of the coolant is detected as an interference signal.

25. Tool holder according to claim 23 or 24, characterised in that the blocking ring (178) has, at its upper end, a plane end face (153) with which the blocking ring (178) can block the orifice (154) of the duct (173; 174) issuing in this region; in the housing (112), depending on the relative rotational position of the blocking ring (178) relative to the housing (112) to block the coolant flow and can clear it when rotated back in the opposite direction.

26. Tool holder according to one of claims 1 to 25, characterised in that the blocking ring (78; 178) is held rotatably relative to the housing (12; 112) in the orifice (24; 124).

27. Tool holder according to one of claims 1 to 26, characterised in that the blocking ring (78; 178) can be rotated back into its clearing position by spring force.

28. Tool holder according to one of claims 1 to 27, characterised in that the spring force is applied by the spring (83; 183) loading the blocking ring (78; 178) downwards in the orifice (24; 124) of the housing (12; 112).

29. Tool holder according to one of claims 1 to 28, characterised in that the spring (83; 183) is fixed in the circumferential direction with one end on the blocking ring (78; 178) and with the other end on the housing (12; 112) and, in addition to the axial spring force, produces a spring force acting in the circumferential direction.

30. Tool holder according to one of claims 1 to 29, characterised in that a relative rotation of the quick-change insert (26; 126) relative to the housing (12; 112) is transmitted to the blocking ring (78; 178) via coupling means.

31. Tool holder according to claim 30, characterised in that the end seal (82; 182) of the blocking ring (78; 178) acts as a coupling means.

## Revendications

1. Porte-outil, en particulier mandrin à changement rapide, de préférence pour filetage, formage de filetages, perçage ou opérations semblables, comportant un récepteur (11 ; 111) qui peut être monté à une extrémité (13 ; 113) dans une broche de machine, un porte-outil ou un élément semblable et présente à l'extrémité opposée une tête (14 ; 114) qui contient une ouverture cylindrique coaxiale (16 ; 116) dans laquelle est montée et guidée sans liberté de rotation mais avec possibilité de déplacement relatif dans la direction longitudinale axiale une boîte (12 ; 112) qui contient une ouverture cylindrique coaxiale (24 ; 124) dans laquelle un élément de changement rapide (26 ; 126) pour un outil (27 ; 127) peut être monté et accouplé avec celui-ci, au moins un corps d'entraînement (36 ; 136) placé entre la tête (14 ; 114) et la boîte (12 ; 112) et qui peut rouler lors du déplacement relatif entre la tête (14 ; 114) et la boîte (12 ; 112) et sert à la transmission de couple entre les deux, et un passage intérieur central de fluide de refroidissement qui va de la tête (14 ; 114) à l'élément de changement rapide (26 ; 126) en traversant la boîte (12 ; 112), caractérisé par un dispositif intérieur de signalisation (47 ; 147) qui répond à un mouvement relatif entre la tête (14 ; 114) et l'élément de changement rapide (26 ; 126) monté et émet un signal de défaut en particulier lorsque l'outil (27 ; 127) est abîmé ou détruit, et présente un dispositif d'arrêt (46 ; 146) qui agit sur l'écoulement et/ou la pression du fluide de refroidissement.

2. Porte-outil selon la revendication 1, caractérisé par le fait que lors d'un mouvement relatif entre la tête (14 ; 114) et l'élément de changement rapide (26 ; 126), le dispositif d'arrêt (46 ; 146) arrête l'écoulement du fluide de refroidissement, et la pression accrue de retenue qui en résulte du fluide de refroidissement est saisie comme signal de défaut.

3. Porte-outil selon l'une des revendications 1 et 2, caractérisé par un tuyau intérieur central (66 ; 166) servant au passage du fluide de refroidissement qui est fixé à une extrémité au récepteur (11 ; 111), de là, s'étend en entrant dans la tête (14 ; 114) et dans un alésage central (67 ; 167) de la boîte (12 ; 112), et, par une sortie (71 ; 171) faite dans sa paroi, envoie le fluide de refroidissement dans une entrée (48 ; 148) qu'il commande d'un canal (73, 74 ; 173, 174) fait dans la boîte (12 ; 112).

4. Porte-outil selon la revendication 3, caractérisé par le fait que l'entrée (48 ; 148) du canal (73, 74 ; 173, 174) est formée d'un espace annulaire (70 ; 170) de la boîte (12 ; 112) qui est étanchéifié à ses deux extrémités axiales et limité du côté intérieur par le tuyau (66 ; 166).

5. Porte-outil selon l'une des revendications 1 à 4, caractérisé par le fait que la sortie (71 ; 171) du tuyau (66 ; 166) est formée d'un ou de plusieurs trous radiaux qui communiquent d'une part avec l'intérieur (72 ; 172) du tuyau (66 ; 166) et d'autre part avec l'entrée (48 ; 148), en particulier l'espace annulaire (70 ; 170), de la boîte (12 ; 112).

6. Porte-outil selon l'une des revendications 1 à 5, caractérisé par le fait que l'entrée (48 ; 148), en particulier l'espace annulaire (70 ; 170), communique avec des canaux (73, 74 ; 173, 174) s'étendant par exemple excentriquement faits dans la boîte (12 ; 112) qui vont jusqu'à l'ouverture cylindrique (24 ; 124) de celle-ci.

7. Porte-outil selon l'une des revendications 1 à 6, caractérisé par le fait que dans la boîte (12 ; 112) est placé un élément de fermeture (de préférence à peu près en forme de pot) (77 ; 177) à l'intérieur (76 ; 176) duquel le tuyau (66 ; 166) plonge à son extrémité.

8. Porte-outil selon l'une des revendications 1 à 7, caractérisé par le fait que l'intérieur de l'élément de fermeture (77 ; 177) est fermé vers l'ouverture intérieure (24 ; 124) de la boîte (12 ; 112).

9. Porte-outil selon l'une des revendications 1 à 8, caractérisé par le fait que l'intérieur de l'élément de fermeture (77 ; 177) communique avec l'atmosphère extérieure.

10. Porte-outil selon l'une des revendications 1 à 9, caractérisé par le fait que l'élément de fermeture (77 ; 177) présente à son extrémité axiale au moins une saillie radiale (80 ; 180).

11. Porte-outil selon l'une des revendications 1 à 10, caractérisé par le fait que l'élément de fermeture (77 ; 177) présente à son extrémité axiale un épaulement annulaire saillant radialement.

12. Porte-outil selon l'une des revendications 1 à 11, caractérisé par le fait que l'élément de fermeture (77 ; 177) présente extérieurement dans la zone de son extrémité libre inférieure au moins un évidement (86 ; 186) qui est ouvert vers le côté périphérique et vers l'extrémité libre inférieure de l'élément de fermeture (77 ; 177) et sert au passage du fluide de refroidissement.

13. Porte-outil selon l'une des revendications 1 à 12, caractérisé par le fait qu'une bague d'arrêt (78 ; 178) est montée dans l'ouverture cylindrique intérieure (24 ; 124) de la boîte (12 ; 112).

14. Porte-outil selon l'une des revendications 1 à 13, caractérisé par le fait qu'un joint annulaire (79 ; 179) prévu sur la bague d'arrêt (78 ; 178) assure l'étanchéité dans la direction circonférentielle entre celle-ci et la boîte (12 ; 112), en particulier la paroi cylindrique (23 ; 123) de celle-ci.

15. Porte-outil selon l'une des revendications 1 à 14, caractérisé par le fait que la bague d'arrêt (78 ; 178) entoure l'élément de fermeture (77 ; 177) avec formation d'un espace annulaire côté périphérique (85 ; 185) entre les deux.

16. Porte-outil selon l'une des revendications 1 à 15, caractérisé par le fait que la bague d'arrêt (78 ; 178) présente à une extrémité au moins une butée saillant radialement vers l'intérieur (81 ; 181) par laquelle elle peut, lorsque l'élément de changement rapide (26 ; 126) est enlevé, buter contre la saillie (80 ; 180) de l'élément de fermeture (77 ; 177).

17. Porte-outil selon l'une des revendications 1 à 16, caractérisé par le fait que la bague d'arrêt (78 ; 178) présente à son extrémité supérieure au moins un canal transversal (84 ; 184) qui communique avec l'évidement (86 ; 186) de l'élément de fermeture (77 ; 177), par exemple par l'espace annulaire (85 ; 185) entre la bague d'arrêt (78 ; 178) et l'élément de fermeture (77 ; 177), et sert à conduire le fluide de refroidissement.

18. Porte-outil selon l'une des revendications 1 à 17, caractérisé par le fait que la bague d'arrêt (78 ; 178) peut être déplacée vers le bas dans l'ouverture (24 ; 124) par l'action d'un ressort (83 ; 183) qui la charge.

19. Porte-outil selon l'une des revendications 1 à 18, caractérisé par le fait que la bague d'arrêt (78 ; 178) présente sur sa face frontale inférieure un joint (82 ; 182) par lequel elle peut être serrée de manière étanche par la pression du fluide de refroidissement et/ou par le ressort (83 ; 183) qui la charge contre la face frontale en regard d'un élément de changement rapide (26 ; 126) monté.

20. Porte-outil selon l'une des revendications 1 à 19, caractérisé par le fait que le dispositif intérieur de signalisation (47) répond à un déplacement axial de la tête (14) par rapport à la boîte (12) en direction de celle-ci ou dans le sens opposé.

21. Porte-outil selon l'une des revendications 1 à 20, caractérisé par le fait que lors d'un déplacement relatif axial de la tête (14) par rapport à la boîte (12) en direction de celle-ci ou dans le sens opposé, le dispositif d'arrêt (46) arrête l'écoulement du fluide de refroidissement, et la pression accrue de retenue qui en résulte du fluide de refroidissement est saisie comme signal de défaut.

22. Porte-outil selon l'une des revendications 1 à 21, caractérisé par le fait que lors d'un déplacement axial de la tête (14) avec le tuyau (66) par rapport à la boîte (12) en direction de celle-ci ou dans le sens opposé, l'entrée (48) du canal (73, 74) de la boîte (12) peut être obturée par le tuyau (66) et l'écoulement du fluide de refroidissement être ainsi arrêté.

23. Porte-outil selon l'une des revendications 1 à 19, caractérisé par le fait que le dispositif intérieur de signalisation (147) répond à une rotation relative entre la boîte (112) et la bague d'arrêt (178).

24. Porte-outil selon la revendication 23, caractérisé par le fait que lors d'une rotation relative dans un sens entre la boîte (112) et la bague d'arrêt (178), le dispositif d'arrêt (146) arrête l'écoulement du fluide de refroidissement, et la pression accrue de retenue qui en résulte du fluide de refroidissement est saisie comme signal de défaut.

25. Porte-outil selon l'une des revendications 23 et 24, caractérisé par le fait que la bague d'arrêt (178) présente à son extrémité supérieure une face frontale plane (153) par laquelle elle peut, suivant sa position angulaire par rapport à la boîte (112), obturer l'ouverture débouchant dans cette zone (154) du canal (173, 174) de la boîte (112) pour arrêter l'écoulement du fluide de refroidissement, ou dégager cette ouverture en cas de rotation dans le sens opposé.

26. Porte-outil selon l'une des revendications 1 à 25, caractérisé par le fait que la bague d'arrêt (78 ; 178) est montée tournante par rapport à la boîte (12 ; 112) dans l'ouverture (24 ; 124).

27. Porte-outil selon l'une des revendications 1 à 26, caractérisé par le fait que la bague d'arrêt (78 ; 178) peut être ramenée par rotation dans sa position de dégagement par une force élastique.

28. Porte-outil selon l'une des revendications 1 à 27, caractérisé par le fait que la force élastique est appliquée par le ressort (83 ; 183) qui agit d'en bas sur la bague d'arrêt (78 ; 178) placée dans l'ouverture (24 ; 124) de la boîte (12 : 112).

29. Porte-outil selon l'une des revendications 1 à 28, caractérisé par le fait que le ressort (83 ; 183) est fixé dans la direction circonférentielle à une extrémité à la bague d'arrêt (78 ; 178) et à l'autre extrémité à la boîte (12 ; 112) et produit en plus de la force élastique axiale une force élastique qui agit dans la direction circonférentielle.

30. Porte-outil selon l'une des revendications 1 à 29, caractérisé par le fait qu'une rotation relative de l'élément de changement rapide (26 ; 126) par rapport à la boîte (12 ; 112) est transmise à la bague d'arrêt (78 ; 178) par un moyen d'accouplement.

31. Porte-outil selon la revendication 30, caractérisé par le fait que le joint frontal (82 ; 182) de la bague d'arrêt (78 ; 178) sert de moyen d'accouplement.
